# EUROPÄISCHE PATENTSCHRIFT

(11) **EP 3 459 908 B1**
(45) Veröffentlichungstag und Bekanntmachung des Hinweises auf die Patenterteilung: **17.11.2021**
(21) Anmeldenummer: 18193984.4
(22) Anmeldetag: 12.09.2018
(51) Int. Cl.: C01B 3/50, H01M 4/88, H01M 4/92

(54) **VERFAHREN ZUR HERSTELLUNG EINER PERMEATIONSMEMBRAN**
METHOD FOR PRODUCING A PERMEATION MEMBRANE
PROCÉDÉ DE FABRICATION D'UNE MEMBRANE DE PERMÉATION

(30) Priorität: 21.09.2017 DE 102017121871
(43) Veröffentlichungstag der Anmeldung: 27.03.2019
(73) Patentinhaber: Fraunhofer-Gesellschaft zur Förderung der angewandten Forschung e.V., 80686 München (DE)
(72) Erfinder: RICHTER, Hannes, 07629 Hermsdorf (DE); SIMON, Adrian, 06722 Wetterzeube (DE); REGER-WAGNER, Norman, 07639 Bad Klosterlausnitz (DE); HERCHER, Janine, 07768 Großeutersdorf (DE)
(74) Vertreter: Oehmke, Volker

(56) Entgegenhaltungen:
- JP-A- 2007 054 693
- US-A1- 2013 152 786

## Beschreibung

Die Erfindung betrifft ein Verfahren zur Herstellung Palladium basierter Permeationsmembranen für die Abtrennung von Wasserstoff aus Gas-Gas oder Flüssig-Gas-Gemischen. Die Permeationsmembranen können beispielsweise in Brennstoffzellen, in Membranreaktoren oder in Stofftrennprozessen eingesetzt werden.

Wasserstoff gewinnt als alternative Energiequelle zu Öl und Gas immer mehr an Bedeutung. Als emissionsfreie und nachhaltige Energieressource spielt es eine tragende Rolle in sämtlichen Power to X Prozessen und gewinnt als Sekundärenergieträger immer mehr an Stellenwert. Die Verfügbarkeit und die Senkung von CO₂-Emissionen liefern einen positiven Beitrag zur Erderwärmung und zum Klimaschutz.

Die Gewinnung von Wasserstoff kann über unterschiedliche Verfahren erfolgen. In Deutschland werden 50 % des Wasserstoffs aus Naphta und Erdgas gewonnen. Der andere größere Anteil wird in Raffinerien erzeugt und ein kleiner Bestandteil auf Basis von Elektrolyse (Bundesministerium für Wirtschaft und Arbeit (ed.); Strategiepapier zum Forschungsbedarf in der Wasserstoff-Energietechnologie; 2005).

Ein attraktiver Ansatz ist die Herstellung von Synthesegas über Dampfreformierung oder Prozesse der Direktvergasung. Das dabei entstehende Gas ist Ausgangspunkt für weitere chemische Prozesse und enthält neben anderen Bestandteilen einen Großteil an Wasserstoff. Dieser Wasserstoff kann unter Verwendung einer wasserstoffselektiven Membran aus dem Gas abgetrennt werden und für andere Anwendung zur Verfügung gestellt werden.

Palladium ist aus mehreren Gründen prädestiniert für die Wasserstoffabtrennung. Aufgrund des Edelmetallcharakters weist es eine sehr hohe Oxidationsstabilität auf, wodurch ein breites Anwendungsspektrum adressiert wird. Ferner besitzt Palladium die Fähigkeit etwa die 600-fache Menge an Wasserstoff bei Raumtemperatur zu adsorbieren. Nachteilig für einen Einsatz als Membranmaterial wirkt sich jedoch dessen Preis aus. Aus diesem Grund existieren Bestrebungen zum Palladium alternative Metalle für eine effiziente Wasserstoffabtrennung zu finden (Nb, Ti, Ni, Ta, V)(Schäfer, C; Diffusionseigenschaften bestimmter Metalle bei der Hochtemperatur-Wasserstoffabtrennung; Dissertation; München; 2010; 114). Ein massives Problem ist dabei deren Oxidationsstabilität. Die Oxidationsschicht würde zum Permeanzverlust führen und dadurch die Effizienz der Membran erheblich herabsetzen. Um den Einsatz von palladiumbasierter Membranen zu legitimieren, müssen die Herstellungskosten drastisch gesenkt werden. Der monetäre und limitierende Schritt ist die Schichtdicke der Membran.

In der Literatur wird von Schichtdicken größer 95 µm berichtet (Shanahan, L K; Wang, D; Flanagan, B T; Permeation and Diffusion of Hydrogen Through Pd Membranes; U.S. Department of Energy - WSRC-MS-2002-00899 2002). Es existieren Ansätze, Palladiumschichten auf poröse Keramik- oder Metallträger zu applizieren. Ein dafür gebräuchliches Verfahren ist das "Electroless Plating". Mit Höllein, V; Palladiumbasierte Kompositmembranen zur Ethylbenzol- und Propan-Dehydrierung; Dissertation; Erlangen; 2004; 204 wird berichtet, dass eine kritische Schichtdicke von mindestens 3 µm erforderlich ist, um mittels des "Electroless Plating" eine defektfreie Schicht zu realisieren. Kontrovers dazu wird in aktuellen Arbeiten von Terra et al. (Terra NM, Lemos COT, Silva FBd, Cardoso VL; Reis MHM; Characterisation of asymmetric Alumina hollow fibers: Application for Hydrogen Permeation in Composite Membranes; Braz. J. Chem. Eng. 2016; 33(3); 567-76) über die Präparation von Palladiumschichten auf Aluminiumoxid-Hohlfasern mittels "Electroless Plating" berichtet. Die erzielten Schichtdicken liegen im Bereich von 1,4 bis 1,8 µm.

Ein weiteres entscheidendes Kriterium ist die Einsatztemperatur. Bei Betrachtung des Phasendiagramms von Palladium-Wasserstoff lässt sich unterhalb einer Temperatur von 300 °C eine Mischungslücke erkennen. Diese hat zur Folge, dass zwei Phasen parallel nebeneinander vorliegen und sich je nach Temperatur umwandeln können. Die Umwandlung beider Phasen führt zu einer Materialermüdung und letztlich zu einer Versprödung (Wasserstoffversprödung). Daraus resultiert die Tatsache, dass Palladiummembranen erst ab einer Temperatur von 300 °C sinnvoll betrieben werden können.

Der Materialversprödung wird durch gezieltes Dotieren von Heteroatomen entgegen gewirkt. Das kann beispielsweise durch Zugabe von Silber oder Yttrium realisiert werden. Untersuchungen von Darling (Alan Sydney Darling; Improvements in and relating to the Separation of Hydrogen from Gaseous Mixtures containing Hydrogen (GB 956176A1); 1962; [November 24, 2015]) haben gezeigt, dass eine Palladium-Silber-Legierung mit 20 bis 23 Gewichts-% Silber das Optimum der Wasserstoffpermeation für dieses Legierungssystem darstellt. Es war möglich bei 23 Gewichts-% Silber eine rund 1,7 bis 1,8 fach größere spezifische Diffusionsrate von Wasserstoff zu ermitteln. Neben Silber als Legierungselement besitzen auch Kupfer und Yttrium ähnliche oder höhere Wasserstoffpermeationen.

Eine andere Möglichkeit der Versprödung entgegenzuwirken besteht in der Verwendung eines porösen Trägersystems. Tanaka et al. (Tanaka D, Tanoc M, Okazaki J, Wakui Y, Mizukami F, Suzuki TM ; Preparation of "pore-fill" type Pd-YSZ-g-Al2O3 composite membrane supported on a-Al2O3 tube for hydrogen Separation ; J. Mem. Sci. 2008(320) ;436-41) haben gezeigt, dass die Abscheidung von Palladium durch "Electroless Plating" auf poröse keramische Substrate mit verschiedenen Vorteilen verknüpft ist, wie beispielsweise die verbesserte Temperaturstabilität und erhöhte Bruchzähigkeit.

In Patent WO 2008/04169 A2 wird eine für Gas selektive und permeable Membran auf Grundlage eines porösen Trägers und deren Herstellung beschrieben. Darin wird Palladium bzw. eine Legierung aus Palladium genannt, welche die selektive Membranschicht bildet. Die Herstellung erfolgt über Koagulation einer kolloidalen Lösung, die in die im Nanometerbereich liegenden Poren (80 bis 100 nm) eingebracht werden. Die kolloidal verteilten Partikel haben eine durchschnittliche Größe von 8 bis 60 nm. Über die Einstellung des pH-Wertes wird die Ladung eingestellt. In WO 2012/030212 A1 wird eine neue Methode zur Abscheidung dünner und selektiver Membranschichten beschrieben. Dieses Verfahren wird anhand von "Electroless Plating" bewerkstelligt, indem die Palladiumkeime aufgebracht werden, die bekeimten Träger getrocknet und anschließend chemisch reduziert werden. Danach schließt sich das "Electroless Plating" an. Die Schichtdicken befinden sich im Bereich von 1 bis 10 µm.

Mit US 2013 0152786 A1 wird ein Verfahren zum "Electroless Plating" beschrieben. Wesentliche Merkmale dabei sind, dass das Metall in der Lösung chemisch reduziert wird und das aufgrund der verwendeten Palladiumspezies (in der Regel einfache Palladiumsalze) keine bevorzugte Abscheidung auf der Oberfläche des Substrates stattfindet. Aus praktischer Sicht sind dichte Schichten in der Größenordnung von größer 1 µm dick.

In der WO 2003/084628 A2 wird ein Verfahren zur Herstellung von palladiumlegierten Kompositmembranen beschrieben, welche sich auf porösen Substraten befinden. Die angegebene Schichtdicke beträgt weniger als 1 µm und wird ebenfalls über "Electroless Plating" Verfahren aufgebracht.

Mit der WO 98/17378 A2 wird eine mehrschichtig aufgebaute Nanofiltrationsmembran offenbart, die einen monolithischen keramischen Mehrkanalträger, eine Mikrofiltrationstrennmembranschicht, eine Ultrafiltrationstrennmembranschicht und eine Nanofiltrationstrennmembranschicht, deren Poren zwischen 0,5 und 1,5 nm liegen, unfasst. Die Nanofiltrationsmembran weist neben der thermischenund chemischen Beständigkeit ein sehr gutes mechanisches Verhalten auf.

Der Erfindung liegt die Aufgabe zugrunde, ein Verfahren zur Herstellung einer Permeationsmembran anzugeben, wobei die Permeationsmembran eine hohe Durchlässigkeit für Wasserstoff aufweisen soll und ohne inhärent auftretende Fehlstellen konzipiert ist.

Erfindungsgemäß wird die Aufgabe durch die Herstellung einer Permeationsmembran gelöst, die aus einer metallischen, semipermeablen Substanz besteht und weitestgehend frei von Defekten ist. Die Permeationsmembran wird dabei hergestellt, indem ein zunächst hergestelltes poröses keramisches Trägersystem einseitig mit einer palladiumhaltigen Schicht, die kleiner als 2 µm dick ist, versehen wird. Das Aufbringen erfolgt über eine nasschemische, precursorgestützte Präparationsvariante unter Einsatz einer Komplexverbindung. Diese Komplexverbindung bildet sich aus einem Palladiumsalz und einem Liganden dessen Molekülgröße auf die Porengröße des Trägersystems abgestimmt ist und eines auf die Löslichkeit dieses Palladiumkomplexes abgestimmten Lösemittels. Die Bestandteile des verwendeten chemischen Komplexes können durch Zugabe von Heteroatomen, wie beispielsweise Kupfer und Silber, zur Legierungsbildung mit Palladium ergänzt werden Das Lösemittel mit dem sich darin gelösten Palladiumsalz wird auf das Trägersystem durch verschiedene Verfahren des Dip Coatings und Fillings appliziert. Die entscheidende Kombination aus Lösemittel, Palladiumsalz und keramischen Trägersystemaufbau mit definierter Porosität führt zu einer oberflächlichen Abscheidung von organischen Palladiumverbindungen. Das Lösemittel wird innerhalb eines Trocknungsschrittes entfernt. Die organischen Bestandteile werden anhand einer thermischen Behandlung umgesetzt und entfernt. Die sich anschließende Temperaturbehandlung unter reduzierten Bedingungen bei erhöhter Temperatur im Bereich von 300 bis 900 °C führt zur Ausbildung von metallischem Palladium. Überraschenderweise erfolgt dabei nicht die Synthese separater Palladiumkörner, sondern sehr dünner und dichter Schichten aus Palladium. Erstaunlicherweise lassen sich anhand dieser trivialen Ausführung gastrennende Schichten generieren. Die daraus erhaltenen Permeationsmembranen weisen Wasserstoffpermeanzen von mindestens 0,6 m³/(m²hbar) auf und eine Wasserstoff/Stickstoff Selektivität von mindestens 150. Die Qualität der Permeationsmembran kann durch eine Mehrfachbeschichtung verbessert werden, da dadurch ein Ausheilen von möglichen Defekten in der vorhergehenden Beschichtung erfolgen kann.

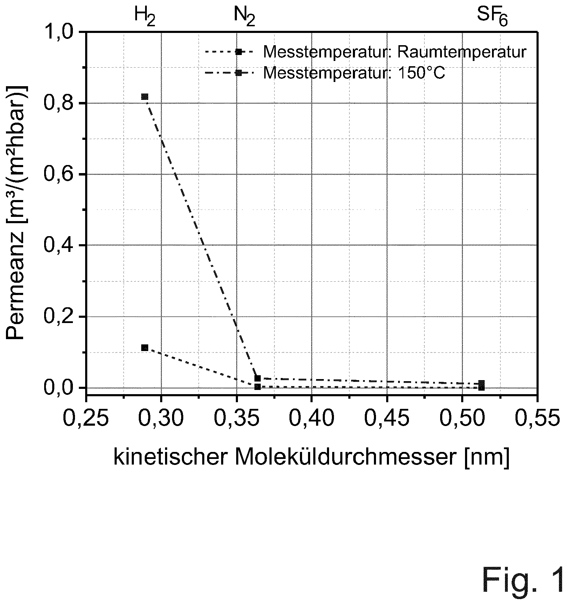

Die Erfindung soll nachstehend anhand von Ausführungsbeispielen näher erläutert werden. Die Zeichnung zeigt in
- Fig. 1: eine tabellarische Darstellung von Einzelgaspermeanzen ausgewählter Gase an einer erfindungsgemäßen Permeationsmembran.

Wie bereits in der Beschreibungseinleitung beschrieben, benötigt eine sehr dünne Metallmembran ein Trägersystem, welches dem Gesamtsystem mechanische Stabilität verleiht, ohne jedoch die Trennung oder den Stofftransport negativ zu beeinflussen. Deshalb wird die Herstellung unterschiedlicher Trägersysteme in drei Ausführungsvarianten vorangestellt, die dann einseitig nachfolgend mit der metallischen Schicht versehen werden:
- 1. Variante:: Eine über keramisches Folienziehen hergestellte poröse, keramische Tablette aus α-Al₂O₃ mit einem mittleren Porendurchmesser von 3 µm, einem Durchmesser der Tablette von 18 mm und einer Dicke von 2 mm wurde schrittweise mit keramischen Schlickern aus α-Al₂O₃-Pulvern abnehmender Partikelgröße über Schleuderbeschichtung und anschließendes Sintern einseitig beschichtet, bis eine finale Deckschicht mit einem mittleren Porendurchmesser von 200 nm aufgebracht war.
- 2. Variante:: Ein über Extrudieren hergestelltes poröses, keramisches Rohr aus α-Al₂O₃ mit einem mittleren Porendurchmesser von 3µm, einem Außendurchmesser von 10mm, einem Innendurchmesser von 7 mm und einer Länge von 100mm wurde schrittweise mit keramischen Schlickern aus α-Al₂O₃-Pulvern abnehmender Partikelgröße durch Schlickergießen und anschließendes Sintern auf der Innenseite beschichtet, bis eine finale Deckschicht mit einem mittleren Porendurchmesser von 100nm aufgebracht war. Auf diese finale Deckschicht wurde ein kolloidales Gel über einseitiges Tauchbeschichten aus einem kolloidalen Böhmitsol abgeschieden, welches nach der Sinterung eine finale γ-Al₂O₃-Schicht mit einem mittleren Porendurchmesser zwischen 2 nm und 5 nm ergab.
- 3. Variante:: In Abwandelung der zweiten Variante wird die finale Deckschicht schrittweise mit einem kolloidalen TiO₂-, einem kolloidalen ZrO₂- und einem polymeren TiO₂-Sol beschichtet und jeweils zwischendurch thermisch behandelt. Die letzte Deckschicht war aus amorphen TiO₂ und hatte einen mittleren Porendurchmesser von 0,9 nm.

### Ausführungsbeispiel 1:

Das Trägersystem entsprechend der zweiten Variante wurde als Ausgangskörper übernommen und einer Palladiumabscheidung wie folgt unterzogen:

Das Trägersystem wurde zunächst einer Temperaturbehandlung unterzogen. Dabei wurden Temperaturen im Bereich von 170 °C angewandt. Die Dauer des Trocknungsschrittes betrug 5 Stunden. Ausgangspunkt für das Abscheiden von Palladium auf der Trägeroberfläche war eine Lösung aus Palladiumacetylacetonat und Chloroform. Diese Lösung wird in das Innere des keramischen Rohres, das zuvor halbseitig verschlossen wurde, eingefüllt. Nach dem Einfüllvorgang wird die Einfüllseite des Rohres ebenfalls verschlossen. Das mit Lösungsmittel und sich darin befindlichem Palladiumsalz gefüllte Trägersystem wird rotierend getrocknet, bis das Lösemittel den porösen Träger vollständig verlassen hat. Das Palladiumsalz befindet sich auf der Oberfläche im Inneren des Trägersystems. Im Anschluss folgt eine thermische Behandlung. Dafür wird das Trägersystem mit dem auf der Innenfläche befindlichen Palladium in die heizkonstante Zone eines Horizontalofens platziert und einer kontrollierten Atmosphäre ausgesetzt. Es folgt ein Aufheizen unter Luft bis 400 °C. Danach wird die Atmosphäre inertisiert unter Verwendung von Stickstoff bzw. Argon und auf 450 °C weiter geheizt. Nach Erreichen der Zieltemperatur von 450 °C wird die Atmosphäre auf Wasserstoff umgestellt und für eine definierte Zeit von einer Stunde gehalten. Der Abkühlvorgang erfolgt unter Stickstoffatmosphäre. Nach Abkühlen des Ofens auf Raumtemperatur kann das mit Palladium beschichtete Trägersystem bzw. die nun fertige Permeationsmembran entnommen und weiteren Untersuchungen zugeführt werden. Der analytische Nachweis erfolgt über Messung verschiedener Gaspermeanzen (siehe Fig. 1). Aus den gemessenen Einzelgaspermeanzen lassen sich die idealen Permselektivitäten verschiedener Gaspaarungen bestimmen. Die Schichtdicke der innenliegenden Palladiumschicht kann anhand elektronenmikroskopischer Untersuchungsmethoden gemessen werden. Anhand von repräsentativen, rasterelektronenmikroskopischen Aufnahmen am Bruch dieser Permeationsmembranen wurden Palladiumschichtdicken von weniger als 500 nm nachgewiesen.

Der geringe SF₆-Fluss gemäß Fig. 1 deutet auf eine geringe Defektdichte hin.

### Ausführungsbeispiel 2:

Eine Trägersystem hergestellt entsprechend der ersten Variante wurde als Ausgangskörper übernommen und einer Palladiumabscheidung wie folgt unterzogen: Das Trägersystem wurde zunächst einer Temperaturbehandlung unterzogen. Dabei wurden Temperaturen im Bereich von 170 °C angewandt. Die Dauer des Trocknungsschrittes betrug 5 Stunden. Ausgangspunkt für das Abscheiden von Palladium auf der Trägeroberfläche war eine Lösung aus Palladiumacetylacetonat und Chloroform. Diese Lösung wird auf das in Rotation versetzte Trägersystem aufgetropft und dadurch breit geschleudert (Spin Coating). Das benetzte Trägersystem wird im Anschluss unter Luftatmosphäre getrocknet. Im Anschluss wird das Palladiumsalz mit seinem Trägesystem einer thermischen Behandlung unterzogen. Dafür wird das Trägersystem mit dem sich darauf befindlichem Palladium in die heizkonstante Zone eines Horizontalofens platziert und einer kontrollierten Atmosphäre ausgesetzt. Es folgt ein Aufheizen unter Luft bis 400 °C. Danach wird die Atmosphäre inertisiert unter Verwendung von Stickstoff bzw. Argon und auf 450 °C weiter geheizt. Nach Erreichen der Zieltemperatur von 450 °C wird die Atmosphäre auf Wasserstoff umgestellt und für eine definierte Zeit von einer Stunde gehalten. Der Abkühlvorgang erfolgt unter Stickstoffatmosphäre. Nach Abkühlen des Ofens auf Raumtemperatur kann die fertige Permeationsmembran entnommen und weiteren Untersuchungen zugeführt werden.

### Ausführungsbeispiel 3:

Eine Trägersystem hergestellt entsprechend der dritten Variante wurde als Ausgangskörper übernommen und einer Palladiumabscheidung wie folgt unterzogen: Das Trägersystem wurde wiederum zum Beginn einer Temperaturbehandlung unterzogen, um die Membran zu trocknen. Dabei wurden Temperaturen im Bereich von 170 °C angewandt. Die Dauer des Trocknungsschrittes betrug 5 Stunden. Ausgangspunkt für das Abscheiden von Palladium auf der Trägeroberfläche war eine Lösung aus Palladiumacetylacetonat und Chloroform. Diese Lösung wird in das Innere des keramischen, bereits halbseitig verschlossenen Trägersystems eingefüllt. Nach dem Einfüllvorgang wird die andere Seite des Trägersystems verschlossen. Das mit Lösungsmittel und Palladiumsalz gefüllte Trägersystem wird rotierend getrocknet, bis das Lösemittel den porösen Träger vollständig verlassen hat. Das Palladiumsalz befindet sich auf der Oberfläche im Inneren des Trägersystems. Im Anschluss folgt eine thermische Behandlung. Dafür wird das Trägersystem mit dem sich darauf befindlichem Palladium in die heizkonstante Zone eines Horizontalofens platziert und einer kontrollierten Atmosphäre ausgesetzt. Es folgt ein Aufheizen unter Luft bis 400 °C. Danach wird die Atmosphäre inertisiert unter Verwendung von Stickstoff bzw. Argon und auf 450 °C weiter geheizt. Nach Erreichen der Zieltemperatur von 450 °C wird die Atmosphäre auf Wasserstoff umgestellt und für eine definierte Zeit von einer Stunde gehalten. Der Abkühlvorgang erfolgt unter Stickstoffatmosphäre. Nach Abkühlen des Ofens auf Raumtemperatur kann die fertige Permeationsmembran entnommen und weiteren Untersuchungen zugeführt werden.

### Ausführungsbeispiel 4:

Eine Trägersystem hergestellt entsprechend der zweiten Variante wurde als Ausgangskörper übernommen und einer Palladiumabscheidung wie folgt unterzogen: Das Trägersystem wurde zu Beginn einer Temperaturbehandlung unterzogen. Dabei wurden Temperaturen im Bereich von 170 °C angewandt. Die Dauer des Trocknungsschrittes betrug 5 Stunden. Ausgangspunkt für das Abscheiden von Palladium auf der Trägeroberfläche war eine Lösung aus Palladiumacetylacetonat und Chloroform. Diese Lösung wird in das Innere des keramischen, zuvor halbseitig verschlossenen Trägersystems eingefüllt. Nach dem Einfüllvorgang wird die andere Seite des Trägersystems verschlossen. Das mit Lösungsmittel und sich darin befindliche Palladiumsalz gefüllte Trägersystem wird rotierend getrocknet, bis das Lösemittel das poröse Trägersystem vollständig verlassen hat. Das Palladiumsalz befindet sich auf der Oberfläche im Inneren des Trägersystems. Im Anschluss folgt eine thermische Behandlung. Dafür wird der Träger mit dem sich darauf befindlichem Palladium in die heizkonstante Zone eines Horizontalofens platziert und einer kontrollierten Atmosphäre ausgesetzt. Es folgt ein Aufheizen unter Luft bis 400 °C. Danach wird die Atmosphäre inertisiert unter Verwendung von Stickstoff bzw. Argon und auf 450 °C weiter geheizt. Nach Erreichen der Zieltemperatur von 450 °C wird die Atmosphäre auf Wasserstoff umgestellt und für eine definierte Zeit von einer Stunde gehalten. Der Abkühlvorgang erfolgt unter Stickstoffatmosphäre. Nach Abkühlen des Ofens auf Raumtemperatur kann das beschichtete Trägersystem entnommen werden. Es findet nun eine weitere Beschichtung mit einer Palladiumsalzlösung statt. Diese Lösung basiert wie die erste zur Beschichtung genutzte Lösung auf Palladiumacetylacetonat und Chloroform. Diese wird wiederum in das Innere des zuvor halbseitig geöffneten Trägersystems gefüllt und nach verschließen rotierend getrocknet bis das Lösemittel den porösen Träger vollständig verlassen hat. Das Palladiumsalz befindet sich auf der Oberfläche im Inneren des Trägers. Im Anschluss folgt eine thermische Behandlung. Dafür wird der Träger mit dem sich darauf befindlichem Palladium in die heizkonstante Zone eines Horizontalofens platziert und einer kontrollierten Atmosphäre ausgesetzt. Es folgt ein Aufheizen unter Luft bis 400 °C. Danach wird die Atmosphäre inertisiert unter Verwendung von Stickstoff bzw. Argon und auf 450 °C weiter geheizt. Nach Erreichen der Zieltemperatur von 450 °C wird die Atmosphäre auf Wasserstoff umgestellt und für eine definierte Zeit von einer Stunde gehalten. Der Abkühlvorgang erfolgt unter Stickstoffatmosphäre. Nach Abkühlen des Ofens auf Raumtemperatur kann die fertiggestellte Permeationsmembran entnommen werden.

## Patentansprüche

1. Verfahren zur Herstellung einer Permeationsmembran, die ein nanoporöses Trägersystem mit Poren im Größenbereich von 0,5 bis 50 nm aufweist, welches mit einer Palladiumschicht durch die folgenden Schritte versehen wird:
a) Aufbringen eines in einem Lösungsmittel gelösten Palladiumkomplexes mit oder ohne Legierungselementen auf das Trägersystem,
b) Entfernen des Lösungsmittels durch Trocknen,
c) Entfernen der organischen Bestandteile durch eine Temperaturbehandlung
d) abschließende Temperaturbehandlung unter reduzierten Bedingungen bei erhöhter Temperatur im Bereich zwischen 300 bis 900 °C.

2. Verfahren nach Anspruch 1, **dadurch gekennzeichnet, dass** die Legierungselemente Kupfer oder Silber sind.

3. Verfahren nach Anspruch 1 oder 2, **dadurch gekennzeichnet, dass** der Palladiumkomplex aus einem Palladiumsalz besteht.

4. Verfahren nach Anspruch 3, **dadurch gekennzeichnet, dass** das Palladiumsalz Palladiumacetylacetonat und das Lösungsmittel Chloroform ist.

5. Verfahren nach Anspruch 1 oder 2, **dadurch gekennzeichnet, dass** vor dem Schritt a) das Trägersystem mit einer Schicht aus γ-Al2O3, TiO2, SiO2 oder ZrO2 versehen wird auf die dann der Schritt a) erfolgt.

6. Verfahren nach einem der vorhergehenden Ansprüche 1 bis 4, **dadurch gekennzeichnet, dass** die Schritte a) bis d) nacheinander mehrfach durchgeführt werden.

## Claims

1. A method for the preparation of a permeation membrane comprising a nanoporous carrier system with pores ranging in size from 0.5 to 50 nm, said system being provided with a palladium layer by the following steps:
a) application of a palladium complex dissolved in a solvent with or without alloying elements to the carrier system,
b) removal of the solvent by drying,
c) removal of the organic components through a thermal treatment,
d) final thermal treatment under reduced conditions at an elevated temperature in the range between 300 and 900 °C.

2. The method according to claim 1, **characterised in that** the alloying elements are copper or silver.

3. The method according to claim 1 or 2, **characterised in that** the palladium complex consists of a palladium salt.

4. The method according to claim 3, **characterised in that** the palladium salt is palladium acetylacetonate and the solvent is chloroform.

5. The method according to claim 1 or 2, **characterised in that** before step a) the carrier system is provided with a layer of γ-Al2O3, Ti02, Si02 or Zr02, which is then followed by step a).

6. The method according to any one of preceding claims 1 to 4, **characterised in that** steps a) to d) are carried out several times in succession.

## Revendications

1. Procédé pour la préparation d'une membrane de perméation comprenant un système de support nanoporeux ayant des pores dans la gamme de taille de 0,5 à 50 nm, ledit système étant pourvu d'une couche de palladium par les étapes suivantes :
a) application d'un complexe de palladium dissous dans un solvant avec ou sans éléments d'alliage sur le système de support,
b) élimination du solvant par séchage,
c) élimination des composants organiques par un traitement thermique,
d) traitement thermique final dans des conditions réduites à une température élevée comprise entre 300 et 900 °C.

2. Procédé selon la revendication 1, **caractérisé en ce que** les éléments d'alliage sont le cuivre ou l'argent.

3. Procédé selon la revendication 1 ou 2, **caractérisé en ce que** le complexe de palladium consiste en un sel de palladium.

4. Procédé selon la revendication 3, **caractérisé en ce que** le sel de palladium est l'acétylacétonate de palladium et le solvant est le chloroforme.

5. Procédé selon la revendication 1 ou 2, **caractérisé en ce que**, avant l'étape a), le système de support est pourvu d'une couche de γ-Al2O3, Ti02, Si02 ou Zr02, qui est ensuite suivie de l'étape a).

6. Procédé selon l'une quelconque des revendications précédentes 1 à 4, **caractérisé en ce que** les étapes a) à d) sont réalisées plusieurs fois de suite.
